Europäisches Patentamt

**European Patent Office**

**Office européen des brevets**

(19)

(11) Numéro de publication: **0 155 241**
A2

# (12) DEMANDE DE BREVET EUROPEEN

(21) Numéro de dépôt: **85830037.9**

(22) Date de dépôt: **15.02.85**

(51) Int. Cl.⁴: **B 23 B 29/034**

(30) Priorité: **23.02.84 IT 934684**

(43) Date de publication de la demande: **18.09.85**
**Bulletin 85/38**

(84) Etats contractants désignés: **DE FR GB SE**

(71) Demandeur: **BAKUER ITALIANA S.p.A., Via del Farneto San Martino alla Palma, I-50010 Scandicci Firenze (IT)**

(72) Inventeur: **Donnini, Giovanni, Via L. Bardelli 3, I-50139 Firenze (IT)**
Inventeur: **Fantini, Giuliano, Via Targioni Tozzetti 26, I-50144 Firenze (IT)**

(74) Mandataire: **Martini, Lazzaro, Ufficio Brevetti Ing. Lazzaro Martini Via Brunelleschi, 1, I-50123 Firenze (IT)**

(54) **Dispositif pour le règlage automatique de l'outil sur le porte-outil monté sur le mandrin d'une machine-outil, sans l'ôter du porte-outil et en utilisant la rotation dudit mandrin.**

(57) Pour obtenir le règlage automatique de l'outil directement sur le porte-outil monté sur le mandrin d'une machine-outil moyennant la rotation du mandrin, on utilise: un cône (1) de fixation au mandrin, muni d'un réducteur de vitesse (2) monté en cascade avec une tête (3) porte-outil; un verrou (4) pour l'arrêt, de l'extérieur, de la roue fixe (29) dudit réducteur (2) permettant ainsi d'activer, en combinaison avec le mouvement du mandrin, le cinématisme dudit réducteur (2); un capteur compte-tours (5) pour contrôler et compter les tours requis du mandrin en relation avec un déplacement radial déterminé de l'outil; une unité de commande du dispositif, qui interagit avec l'unité de commande de la machine, pour commander le blocage/déblocage dudit verrou (4).

EP 0 155 241 A2

<u>"Dispositif pour le règlage automatique de l'outil sur le porte-outil monté sur le mandrin d'une machine-outil, sans l'ôter du porte-outil et en utilisant la rotation dudit mandrin".</u>

L'invention concerne un dispositif pour le règlage automatique de l'outil sur le porte-outil monté sur le mandrin d'une machine-outil, sans l'ôter du porte-outil et en profitant de la rotation dudit mandrin.

On sait que pour l'alésage des trous à stricte tolérance, un grand obstacle qui empêche souvent d'atteindre un bon résultat dans ce type d'opération est l'usure du tranchant provoquée par de multiples causes; quand cet effet se vérifie, habituellement la mesure à réaliser n'est pas atteinte par défaut et le trou est d'habitude plus petit, de sorte qu' il est nécessaire de le retoucher. Pour effectuer cette opération en utilisant les porte-outils à simple tranchant (barres d'alésage) traditionnels, équipés d'unités micrométriques, il est très difficile et fort risqué de tenter d'effectuer la correction manuelle de l'outil en agissant sur les organes de règlage de l'unité micrométrique, même s'ils sont de type à fiabilité maximale, en ce qu'il s' agit habituellement de variations d'ordre millésimal. Pour être sûr d'obtenir un résultat certain, la barre d'alésage devrait être démontée de la machine et réglée sur le banc de "pre-setting", mais de cette manière les temps d'intervention deviennent très coûteux et une certaine dose de risque subsiste, qui est due au fait que, avec la barre d'alésage enlevée du fuseau machine puis remontée dedans, quand il s'agit de récupérer des dimensions de valeur millésimale, il suffit que de toutes petites particules de saleté restent à l'interiéur du cône femelle du mandrin machine ou sur le cône-même de la barre d'alésage pour que l'on puisse avoir des erreurs.

Pour supprimer ces difficultés et ces incertitudes dans la compensation de l'usure du tranchant, la solution optimale consiste à pouvoir régler l'outil de la barre d'alésage automatiquement au lieu de manuellement et sans rien enlever de la machine.

L'objectif principal de la présente invention consiste donc à proposer un dispositif pour le réglage automatique de l'outil sans enlever la barre d'alésage.

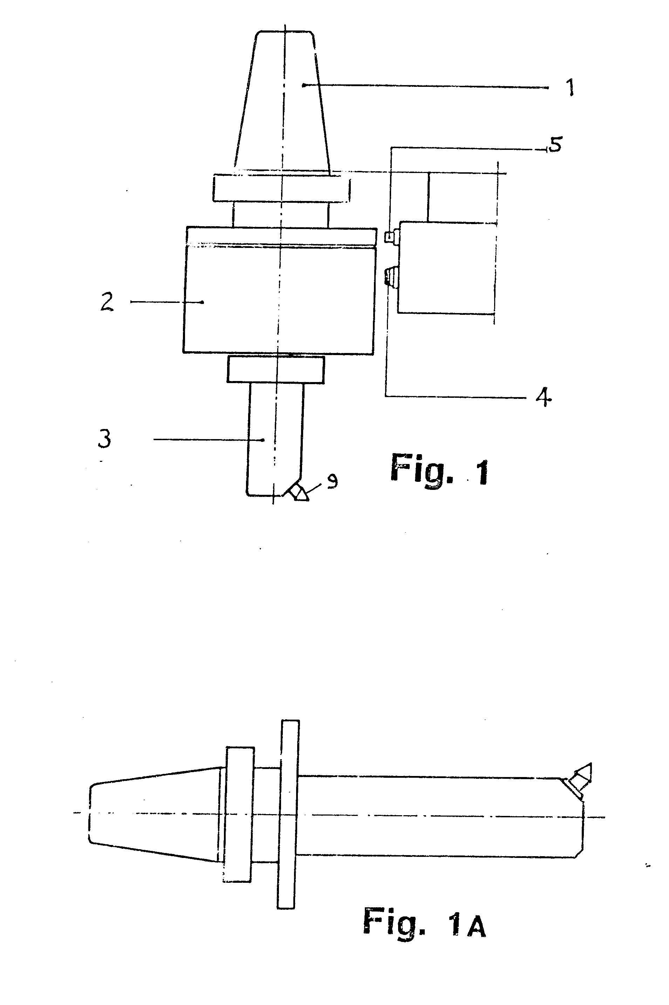

L'invention, telle qu'elle est caractérisée dans les rivendications, consiste à transformer une barre d'alésage, de simple structure à pièce unique (comme l'illustre la Fig. 1A) équipée d'un outil monté sur une unité micrométrique, en une structure composée, en interposant, entre le cône de fixation 1 de la barre d'alésage au mandrin et la tête porte outil 3, un réducteur de vitesse 2 avec un rapport très élevé qui peut varier selon la fonction à réaliser (par ex. 1/1000) et une roue fixe peut être bloquée, de l'extérieur, au moyen d'un verrour 4 pour activer la cinématique du réducteur, de manieré telle que, dans un tel dispositif, la rotation du mandrin détermine le réglage automatique de l'
outil sur la tête du porte-outil.

Les avantages obtenus grâce à l'invention consistent essentiellement en ce qu'il est possible d'exécuter le réglage de micron; en ce qu'un tel réglage est réalisé de manière automatique et rapide, étant obtenu sans enlever la barre d'alésage; en ce que le fonctionnement est sûr et a une fiabilitée très élevée.

L'invention est exposée ci-après plus en détail à l'aide de dessins représentant seulement un mode d'execution.

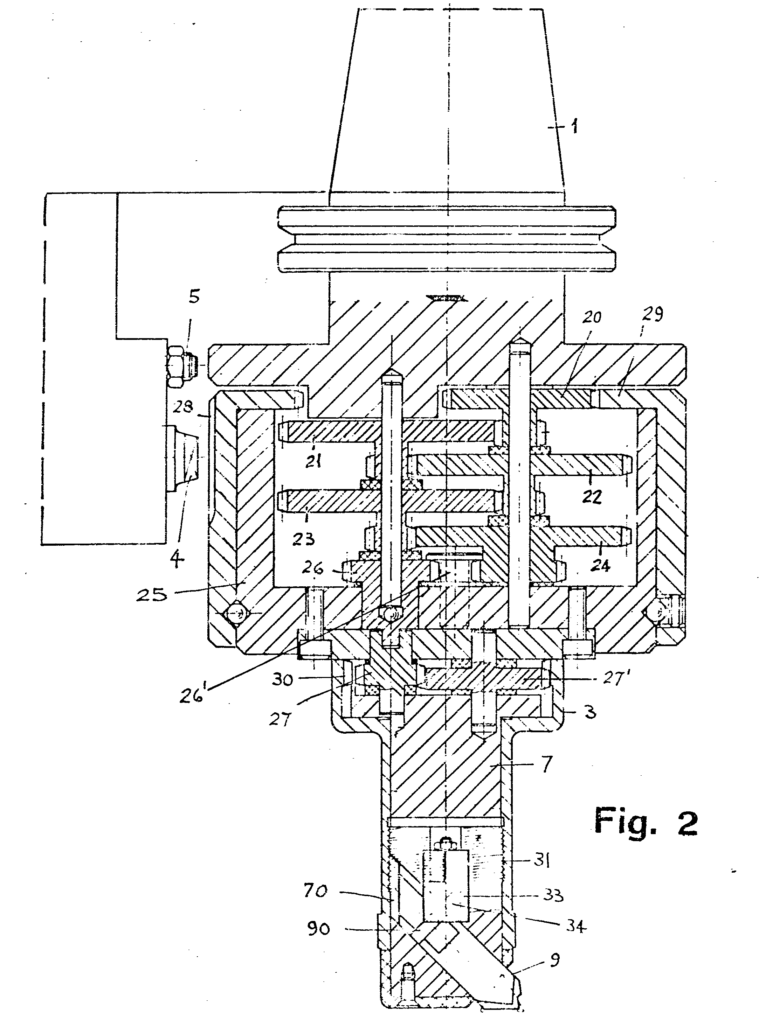

La Figure 1 représente la vue d'ensemble d'un dispositif conforme a l'invention; la Figure 1A représente une structure traditionnelle à pièce unique; la Figure 2 représente la section longitudinale axiale du dispositif de la Figure 1.

Un dispositif conforme à l'invention comprend:
- un cône 1 de fixation au mandrin de la machine;
- un réducteur de vitesse 2, composé d'un corps 25 fixé avec des vis audit cône 1 et avec l'interposition des couples roue dentée-pignon 20-21-22-23-24, d'un boîtier avec la couronne dentée 29 en prise avec la roue du couple 20 susmentionné, d'un train d'engrenages 26-26', 27-27' pour la transmission du mouvemnt à la tête 3 porte-outil;
- une tête 3 porte-outil avec une couronne 30 en prise avec ladite roue 27', avec un écrou 31 en prise avec un patin 33 dont le dos est également fileté et coulissant dans une rainure longitudinale du corps 7, solidaire du corps 25 et portant l'outil 9; ledit patin 33 a le devant muni d'une dent en relief 34, prismatique, à pans parallèles et inclinés à 45° par rapport à l'axe de la tête 3; cette dent 34 s'engage dans le tracé 90 transversal de l'outil 9, ledit outil étant coulissant dans un logement 70 oblique dudit corps 7: ladite tête 3 et ses engins de glissement de l'outil 9 faisant l'objet de la demande de brevet d'invention italien n.9413-A/83 du 04.05.1983 au nom du même titulaire;

- un verrou 4 à commande électromagnétique, hydraulique ou pneumatique pénétrant dans un tracé 28 de la jupe du réducteur 2 dans le but de bloquer ladite couronne 29 du réducteur 2;

- un capteur compte-tours 5 en coopération avec une unité de commande, pour controller et compter les tours du mandrin durant le réglage de l'outil 9.

Il est tout à fait évident que, lorsque le boîtier du réducteur 2 tourne solidairement au corps 25, le dispositif devient une structure à pièce unique et le cône transmet le mouvemnt positivement à la tete 3 et partant à l'outil 9.

Le fonctionnement est le suivant. Lorsque le capteur omnidirectionnel dont est dotée la machine à relevé une différence de diamètre d'un trou à peine fait, cette donnée est mémorisée par l'unité de commande et celle-ci ordonne dans l'ordre: le blocage du boîtier de la couronne 29 en activant le verrou 4; la rotation du mandrin qui, par l'intermédiaire du réducteur 2, détermine le déplacement millésimal de l'outil 9 pour chaque tour du mandrin au moyen

- 5 -

015524 1

du cinématisme spécial et, après que le capteur ou un autre dispositif inséré sur la machine ait comptée la nombre nécessaire de tours du mandrin pour récupérer la différence de cote enregistrée, l'unité de commande ordonne le déblocage de la couronne 29 du réducteur 2 en retirant le verrou 4, et ainsi l'exécution de l'alésage de retouche. Après avoir effectué la retouche sur le trou, ledit capteur omnidirectionnel exécute un nouveau contrôle et,si la dimension relevée est dans les limites de tolérance, le capteur donne à l'unité de commande de la machine son consentement pour la poursuite du cycle programmé de lavoration.

R E V E N D I C A T I O N S

1)      Un dispositif pour le règlage automatique de l'outil sur le porte-outil monté sur le mandrin d'une machine-outil sans l'ôter du porte-outil et en utilisant la rotation dudit mandrin, dispositif caractérisé par le fait qu'il comprend un cône (1) de fixation au mandrin de la machine, un réducteur de vitesse (2) avec un corps(25)fixé de manière concentrique par rapport audit cône (1), une tête (3) porte-outil avec un corps (7) fixé de manière concentrique par rapport audit corps (25) du reducteur (2), un verrou (4) pour bloquer de l'extérieur le boîtier dudit réducteur (2) en phase de règlage de l'outil (9), un capteur compte-tours (5) pour compter et contrôler le nombre des tours du mandrin durant le règlage de l'outil (9), un réalisateur pour activer/désactiver ledit verrou (4).

2)    Un dispositif conforme à la revendication 1) caractérisé par le fait que ledit réducteur de vitesse (2) comprend un boîtier auquel est fixée une couronne (29) sur laquelle agit un système d'engrenages (20-21-22-23-24-26-26'-27-27') lorsque ledit boîtier est bloqué de l'extérieur; autrement, si ledit boîtier n'est pas bloqué, le mouvement du mandrin est transmis positivement à l'outil (9).

3)    Un dispositif conforme à la revendication 1) caractérisé par le fait que ledit réducteur de vitesse (2) est dans un rapport tel qu'il permet n'importe quelle approximation préétablie.

4)      Un dispositif conforme à la revendication 1) caractérisé par le fait que ledit verrou (4) s'enga ge, par commande électromagnétique, hydraulique ou pneumatique, ou par n'importe quel autre type de mouvement, dans un tracé (28) de la jupe de la couronne (29).

5) Un dispositif conforme à la revendication 1) caractérisé par le fait d'être à même d'interagir avec l'unité de commande de la machine à laquelle le dispositif est appliqué.

6) Un dispositif conforme à la revendication 1) caractérisé par le fait que ladite tête (3) est munie d'un écrou (31) en prise evec un patin (33) coulissant dans une rainure du corps (7) susmentionné, ledit patin (33) étant muni d'une dent (34), inclinée par rapport à l'axe de la tête (3) et engagée dans un tracé (90) transversal de l'outil (9), et muni d'un frein pour empêcher les déplacements accidentels, avec ledit outil coulissant dans un logement oblique dudit corps (7).

**Fig. 1**

**Fig. 1A**

Fig. 2

2/2

0155241